# EUROPÄISCHE PATENTSCHRIFT

(11) **EP 0 919 414 B1**
(45) Veröffentlichungstag und Bekanntmachung des Hinweises auf die Patenterteilung: **12.12.2001**
(21) Anmeldenummer: 98121081.8
(22) Anmeldetag: 06.11.1998
(51) Int. Cl.: B60J 7/20

(54) **Cabriolet-Fahrzeug**
Convertible vehicle
Véhicule convertible

(30) Priorität: 10.11.1997 DE 19749552
(43) Veröffentlichungstag der Anmeldung: 02.06.1999
(73) Patentinhaber: CTS Fahrzeug-Dachsysteme GmbH, 21079 Hamburg (DE)
(72) Erfinder: Neubrand, Frank, 70435 Stuttgart (DE); Wojciech, Wezyk, 71065 Sindelfingen (DE); Stiekeler, Ansgar, 71642 Ludwigsburg (DE); Klein, Berthold, 71277 Rutesheim (DE); Legler, Dirk, 70825 Korntal-Münchingen (DE)
(74) Vertreter: Müller, Gottfried

(56) Entgegenhaltungen:
- DE-A- 3 939 145
- US-A- 5 573 296
- US-A- 5 803 530

## Beschreibung

Die Erfindung bezieht sich auf ein Cabriolet-Fahrzeug mit einem Verdeck gemäß dem Oberbegriff des Patentanspruchs 1.

Aus der DE 39 39 145 A1 geht ein Cabriolet-Fahrzeug mit einem Verdeck hervor, wobei der heckseitige, hinter einer Hintersitzanlage befindliche Aufnahmeraum zur Aufnahme des zurückgeklappten Verdecks nach oben hin durch eine mehrteilige Abdeckung verschließbar ist. Die Abdeckung umfaßt ein Mittelteil und zwei in Schließstellung der Abdeckung an die seitlichen Ränder des Mittelteils angeschlossene Seitenteile. Beim Öffnungs- und Schließvorgang des Verdecks wird zur Freigabe des Aufnahmeraums zuvor das Mittelteil der Abdeckung über eine lineare, etwa horizontale Verschiebebewegung nach vorne in den Bereich der Hintersitzanlage verlagert und die beiden Seitenteile klappen jeweils um eine vertikale Drehachse nach innen auf das Mittelteil. Dieser Anordnung haftet der Nachteil an, daß beim Öffnungs- und Schließvorgang des Verdecks die Hintersitzanlage nicht für Insassen nutzbar ist, da die Bauteile der Abdeckung in diesem Bereich bewegt werden, um den heckseitigen Aufnahmeraum vollständig freizugeben zum Ein- bzw. Ausklappen des Verdecks.

Aufgabe der Erfindung ist es, eine mehrteilige Abdeckung für einen heckseitigen Aufnahmeraum eines Verdecks so weiterzubilden, daß die dem Aufnahmeraum vorgelagerte Sitzanlage auch während des Öffnungs- und Schließvorgangs des Verdecks für die Fahrzeuginsassen voll nutzbar ist.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die erfindungsgemäße Ausbildung der Abdeckung die dem Aufnahmeraum vorgelagerte Sitzanlage auch während des Öffnungs- und Schließvorgangs des Verdecks voll nutzbar ist. In der Freigabestellung des Aufnahmeraumes umgibt die mehrteilige Abdeckung die vorgelagerte Sitzanlage bzw. die Fondinsassen nach oben hin schildartig. Dabei ist die Vorderkante des Mittelteils nach oben hin angestellt und die beiden Seitenteile klappen um längsgerichtete Scharnierachsen nach innen bzw. unten hin ein.

Das Mittelteil der Abdeckung ist an beiden Längsseiten mittels einer gesteuerten Viergelenkanordnung schwenkbar. Jedes Seitenteil ist über eine längsgerichtete Scharnierachse und ein Steuerelement mit dem Mittelteil verbunden, so daß beim Bewegen des Mittelteils die beiden Seitenteile eine zwangsgesteuerte Klappbewegung ausüben.

Die erfindungsgemäße Ausbildung der Abdeckung hat zur Folge, daß der hintere untere Rand des Verdeckbezugs anstelle einer aufwendigen Spannbügelbefestigung in einfacher Weise unmittelbar am feststehenden Aufbau festlegbar ist. Zudem kann die Heckscheibe als heizbare Festglasscheibe ausgebildet werden, was vor allem im Winterbetrieb und beim Beschlagen der Heckscheibe vorteilhaft ist. Die vorgesehene mehrteilige Abdeckung weist einen einfachen Aufbau auf und zeichnet sich durch eine gute Funktion aus.

Durch den Wegfall des hinteren Spannbügels reduziert sich der erforderliche Aufnahmeraum des Verdecks; somit erhöht sich das nutzbare Kofferraumvolumen. Die Öffnungs- und Schließzeiten des Verdecks lassen sich gekoppelt mit dieser Abdeckung erheblich reduzieren. Der Aufnahmeraum für das Verdeck ist auch bei geschlossenem Verdeck abgedeckt.

Ein Ausführungsbeispiel der Erfindung ist in der Zeichnung dargestellt und wird nachfolgend im einzelnen beschrieben.

Es zeigen
- Fig. 1: eine perspektivische Teilansicht von schräg hinten auf einen Personenkraftwagen mit einem Verdeck und einer mehrteiligen Abdeckung für einen das Verdeck aufnehmenden heckseitigen Aufnahmeraum, wobei die Abdeckung eine Abdeckstellung einnimmt,
- Fig. 2: eine perspektivische Teilansicht auf den heckseitigen Aufnahmeraum, wobei die Abdeckung ihre vorgelagerte Freigabestellung einnimmt,
- Fig. 3: eine Teilseitenansicht auf den Personenkraftwagen in Abdeckstellung der Abdeckung,

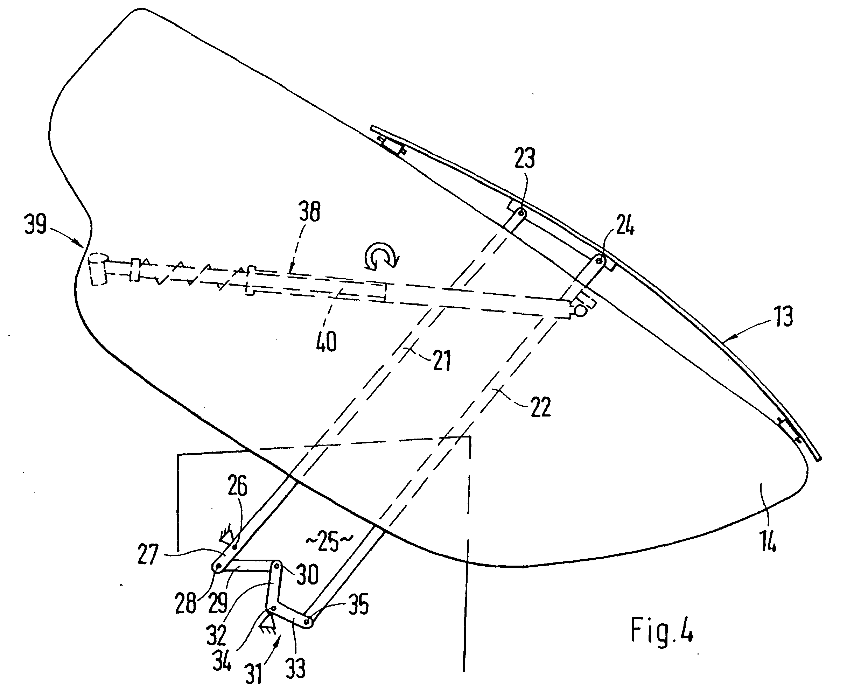

- Fig. 4: eine Teilseitenansicht auf den Personenkraftwagen in einer Zwischenstellung der Abdeckung und
- Fig. 5: eine Teilseitenansicht auf den Personenkraftwagen in der vorgelagerten Freigabestellung der Abdeckung.

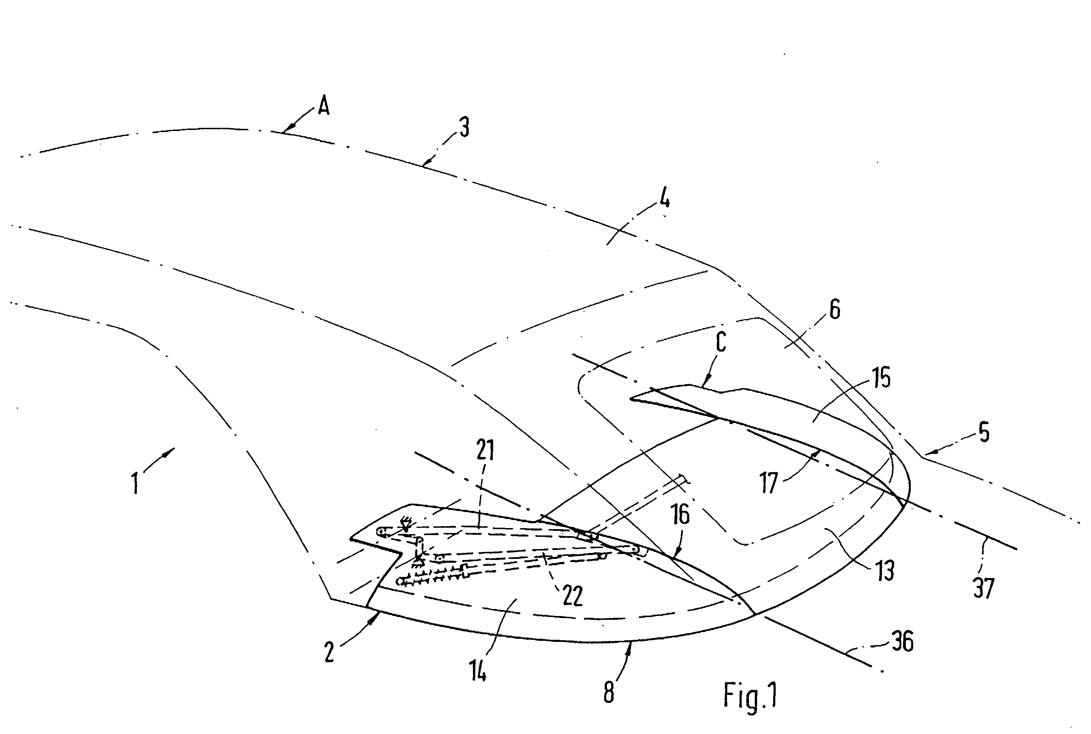

Ein durch einen Personenkraftwagen gebildetes Cabriolet-Fahrzeug 1 weist oberhalb einer Gürtellinie 2 ein Verdeck 3 auf, das von einer Schließstellung A (Fig. 1) in eine nicht näher dargestellte heckseitige Ablagestellung B verlagerbar ist und umgekehrt. Das Verdeck 3 wird im Ausführungsbeispiel durch ein Faltverdeck gebildet, das sich aus einem nicht näher dargestellten klappbaren Verdeckgestänge und einem vom Verdeckgestänge getragenen faltbaren Verdeckbezug 4 zusammensetzt. In der Schließstellung A erstreckt sich das Verdeck 3 von einem nicht näher gezeigten querverlaufenden oberen Windschutzscheibenrahmen bis zu einem Heckbereich 5. Im hinteren Bereich des Verdeckbezugs 4 ist eine Heckscheibe 6 vorgesehen, die im Ausführungsbeispiel als starre, beheizbare Heckscheibe ausgebildet ist. Die Heckscheibe 6 könnte jedoch auch durch eine flexible Scheibe gebildet werden. Der hintere, untere Rand des Verdeckbezuges 4 ist in nicht näher dargestellter Weise fest mit dem angrenzenden feststehenden Aufbau verbunden, so daß auf einen heckseitigen Stoffhaltebügel bzw. Spannbügel verzichtet werden kann.

In der zurückgeklappten Ablagestellung B ist das Verdeck 3 in einem heckseitigen Aufnahmeraum 7 aufgenommen, der nach oben hin durch eine mehrteilige Abdeckung 8 verschließbar ist (vollversenkbares Verdeck). Der Aufnahmeraum 7 wird im Ausführungsbeispiel durch einen aus einer Bodenwand und Seitenwänden zusammengesetzten Verdeckkasten 9 gebildet, der in der Draufsicht gesehen etwa eine U-förmige Kontur aufweist. Die beiden seitlichen Schenkel 10 der U-förmigen Kontur erstrecken sich dabei in Fahrzeuglängsrichtung und sind weiter nach vorne gezogen als der querverlaufende hintere Bereich 11.

Dem Verdeckkasten 9 unmittelbar vorgelagert ist eine Sitzanlage 12, die aus Einzelsitzen oder einer durchgehenden Sitzbank zusammengesetzt sein kann. Die im Ausführungsbeipsiel als Hintersitzanlage dargestellte Sitzanlage 12 schließt an beiden seitlichen Bereichen und hinten unmittelbar an den angrenzenden Verdeckkasten 9 an.

Die mehrteilige Abdeckung 8 umfaßt ein einteiliges Mittelteil 13 sowie zwei Seitenteile 14, 15 wobei die beiden Seitenteile 14, 15 in Abdeckstellung C der Abdeckung 8 an die seitlichen Ränder 16, 17 des Mittelteils 13 angeschlossen sind. In der Abdeckstellung C verschließen das Mittelteil 13 und die Seitenteile 14, 15 den Verdeckkasten 9 nach oben hin vollständig.

Beim Öffnungs- und Schließvorgang des Verdecks 3 muß zeitlich vorgelagert oder überlagert zur Verdeckbewegung die Abdeckung 8 von der Abdeckstellung C in eine die Verdeckbetätigung ermöglichende Freigabestellung D verlagert werden.

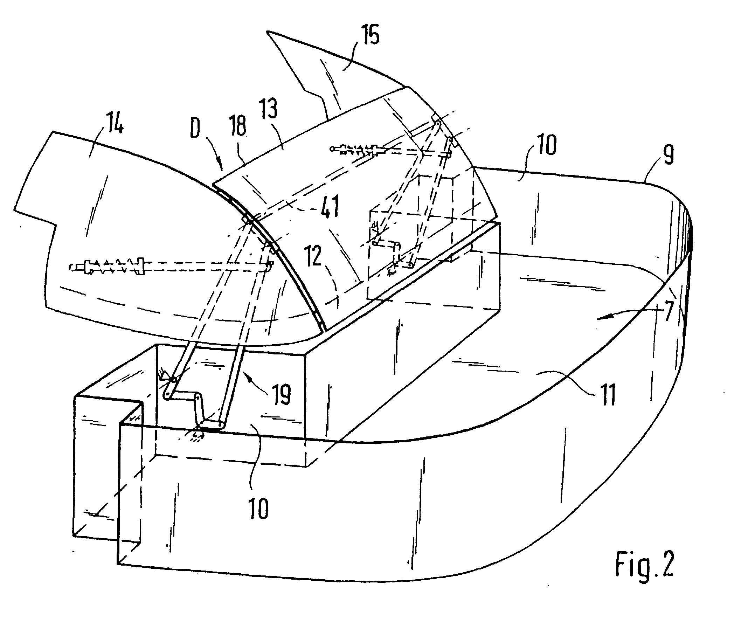

Erfindungsgemäß ist vorgesehen, daß das Mittelteil 13 der Abdeckung 8 unter gleichzeitiger nach oben gerichteter Anstellung seiner Vorderkante 18 mittels einer Verstelleinrichtung 19 nach vorne in Richtung der vorgelagerten Sitzanlage 12 bewegt wird und daß außerdem die Seitenteile 14, 15 der Abdeckung 8 nach innen und unten klappen, so daß in der Freigabestellung D der mehrteiligen Abdeckung 8 diese die Sitzanlage 12 nach oben hin schildartig umgibt. In dieser schildartigen Freigabestellung D der Abdeckung 8 werden die Sitzinsassen der angrenzenden Sitzanlage 12 in ihrem Sitzkomfort nicht eingeschränkt, d.h. die Sitzinsassen müssen weder den Kopf einziehen noch brauchen sie die Sitzanlage 2 beim Öffnen und Schließen des Verdecks 3 zu verlassen. Wie aus Fig. 2 ersichtlich, schließen die unteren Randbereiche der Seitenteile und des Mittelteils der Abdeckung 8 in der schildartigen Freigabestellung D unmittelbar an den oberen Rand der Sitzanlage 12 bzw. den oberen Rand des Verdeckkastens 9 an.

Die Betätigung des Verdecks 3 erfolgt vorzugsweise halbautomatisch, d.h. das Verriegeln bzw. Entriegeln des Verdecks 3 am Windschutzscheibenrahmen erfolgt manuell, wogegen die Verstellbewegung des Verdecks 3 und der Abdeckung 8 automatisch abläuft.

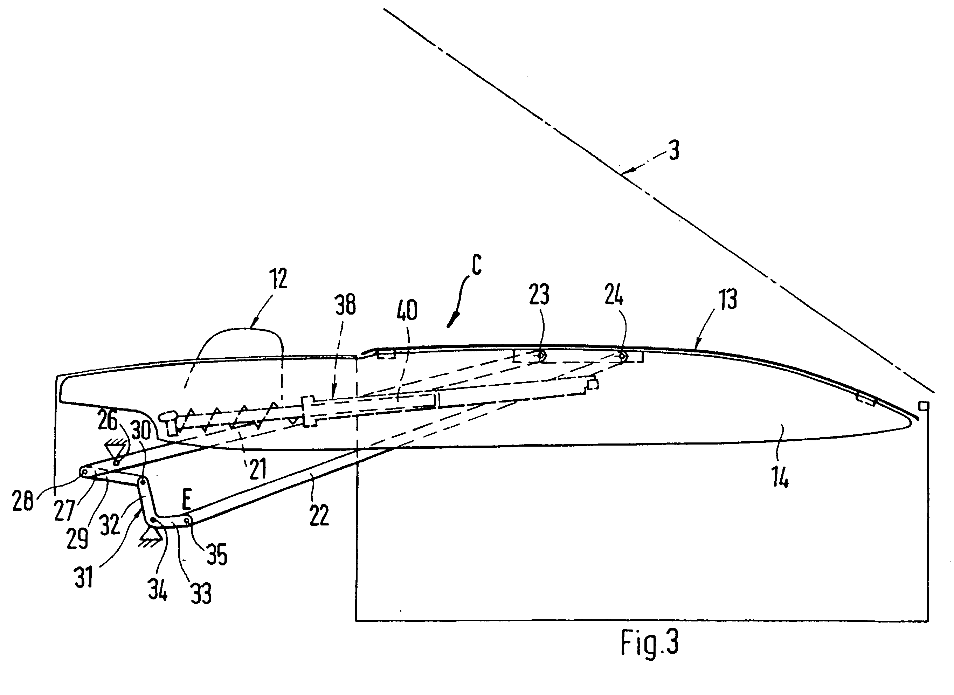

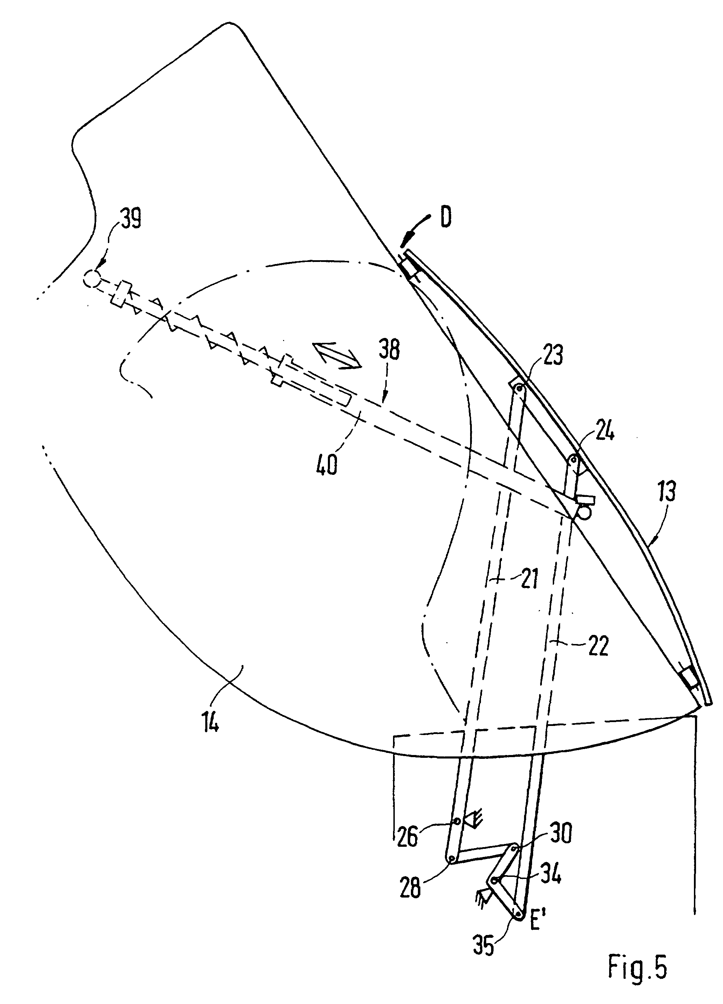

Das etwa plattenförmige, in beiden Richtungen einen leicht gebogenen Formverlauf aufweisende Mittelteil 13 ist im Ausführungsbeispiel an jeder Längsseite über eine Viergelenkanordnung 20 am feststehenden Aufbau abgestützt und gegenüber diesem verschwenkbar. Die Viergelenkanordnung 20 ist vorzugsweise als gesteuerte Viergelenkanordnung ausgebildet, dergestalt, daß ein unterer hinterer Drehpunkt 35 der Viergelenkanordnung 20 während der Verstellbewegung des Mittelteils 13 seine Lage verändert. In der Schließstellung des Mittelteils 13 nimmt der Drehpunkt 35 die Stellung E ein (Fig. 3). Beim nach vorne schwenken des Mittelteils 13 wandert der Drehpunkt 35 auf einem Kreisbogen im Uhrzeigersinn nach unten und etwas nach vorne, wobei der Drehpunkt 35 in der Freigabestellung D die Stellung E' einnimmt (Fig. 5). Die Viergelenkanordnung 20 umfaßt zwei langgestreckte, in Querrichtung örtlich abgekröpfte Lenkhebel 21, 22, wobei die dem Mittelteil 13 zugekehrten Enden der beiden Lenkhebel 21, 22 drehbar mit dem Mittelteil 13 verbunden sind (Drehpunkte 23, 24).

Die beiden oberen Drehpunkte 23, 24 der Lenkhebel 21, 22 sind in einem vorneliegenden Bereich der Längserstreckung des Mittelteils 13 vorgesehen, wobei der Drehpunkt 23 dem vorderen Lenkhebel 21 und der Drehpunkt 24 dem hinteren Lenkhebel 22 zugeordnet ist.

Das gegenüberliegende Ende des in Fahrtrichtung gesehen vorne liegenden Lenkhebels 21 ist über ein querverlaufende Drehachse mit einer feststehenden Aufbaukonsole 25 verbunden (ortsfester Drehpunkt 26) und weist eine über den Drehpunkt 26 nach unten ragende Verlängerung 27 auf, die um einen Drehpunkt 28 mit einem Zwischenhebel 29 gelenkig verbunden ist. Das andere Ende des Zwischenhebels 29 ist über einen Drehpunkt 30 mit einem Winkelhebel 31 drehbar verbunden. Der Winkelhebel 31 ist etwa im Verbindungsbereich seiner beiden Schenkel 32, 33 an der Aufbaukonsole 25 über eine querverlaufende Drehachse schwenkbar gelagert (ortsfester Drehpunkt 34). Das freie Ende des einen Armes 32 des Winkelhebels 31 ist mit dem Zwischenhebel 29 und das freie Ende des anderen Armes 33 ist mit dem in Fahrtrichtung hintenliegenden Lenkhebel 22 um den Drehpunkt 35 gelenkig verbunden.

Beide Seitenteile 14, 15 der Abdeckung 8 sind über jeweils eine - in Abdeckstellung C gesehen - sich etwa in Längsrichtung erstreckende Scharnierachse 36, 37 schwenkbar mit dem äußeren Rand 16, 17 des Mittelteils 13 verbunden. Zwischen dem Mittelteil 13 und dem angrenzenden Seitenteil 14 bzw. 15 ist jeweils zumindest ein Scharnier vorgesehen (Drehgelenk).

Zur definierten Steuerung der Seitenteile 14, 15 beim Verschwenken des Mittelteils 13 ist für jedes Seitenteil 14, 15 zumindest ein Steuerelement 38 vorgesehen, das einen der beiden Lenkhebel 21 oder 22 mit dem Seitenteil 14 bzw. 15 verbindet.

Gemäß Fig. 5 ist der hintere Lenkhebel 22 benachbart seiner Anlenkung an das Mittelteil 13 über das Steuerelement 38 mit einem entfernt von der Scharnierachse 36 liegenden vorderen Endbereich 39 des Seitenteils 14, 15 verbunden. Das Steuerelement 38 wird durch eine längenveränderbare Schubstange 40 oder ein teleskopierbares Element gebildet und erstreckt sich in Längsrichtung des Fahrzeuges. Das Steuerelement 38 ist durch ein Kreuzgelenk mit dem Lenkhebel 22 verbunden. Die Anbindung des Steuerelements 38 an das Seitenteil 14, 15 erfolgt ebenfalls durch ein Kreuzgelenk.

Beim Aufrichten des Mittelteils 13 bewegt sich die Anbindung des Steuerelements 38 an der Viergelenkanordnung 20, relativ gesehen zur Anbindung des Seitenteils 14, 15, am Mittelteil 13 nach hinten. Das Seitenteil 14, 15 kann dieser Bewegung nicht folgen, klappt, um die Relativbewegung auszugleichen nach innen und legt sich parallel an das Viergelenk.

Die Anbindung des Steuerelements 38 am Seitenteil 14, 15 muß so ausgelegt sein, daß sie je nach erforderlichem Schwenkwinkel des Viergelenks im Ablauf harmoniert. Beide Bewegungen lassen sich in ihrer Auslegung entkoppeln, indem man an dem Steuerelement 38 eine Längenverschieblichkeit mit einem Anschlag vorsieht. Das Seitenteil 14, 15 kann schnell einklappen und sich dann im eingeklappten Zustand mit dem Mittelteil 13 weiter aufrichten, indem die Relativbewegung ab diesem Zeitpunkt durch die Längsverschieblichkeit des Steuerelements 38 ausgeglichen wird.

Zumindest einer der beiden Lenkhebel 21, 22 jeder Längsseite ist durch eine starre Querverbindung 41 mechanisch miteinander gekoppelt, so daß nur eine Seite der Verstelleinrichtung 19 mittels einer nicht näher gezeigten Antriebseinheit angetrieben werden muß (z.B. elektromotorischer Antrieb).

Die einzelnen Bauteile der Abdeckung 8 können in Blechbauweise, als Druckgußteile oder als Kunststoffteile hergestellt werden. Die Bewegung des Verdecks 3 erfolgt vorzugsweise hydraulisch.

## Patentansprüche

1. Cabriolet-Fahrzeug mit einem Verdeck (3), das in seiner zurückgeklappten Ablagestellung in einem heckseitigen Aufnahmeraum (9) aufgenommen ist, dem eine Sitzanlage vorgelagert ist, wobei der Aufnahmeraum nach oben hin durch eine mehrteilige Abdeckung (13-15) verschließbar ist, die sich aus einem Mittelteil (13) und zwei an die seitlichen Ränder des Mittelteils angeschlossenen Seitenteilen (14, 15) zusammensetzt, wobei beim Öffnungs- und Schließvorgang des Verdecks (3) die Abdeckung jeweils zuvor von einer Abdeckstellung in eine die Verdeckbetätigung ermöglichende Freigabestellung verlagerbar ist, **dadurch gekennzeichnet, daß** das Mittelteil (13) der Abdeckung (8) unter gleichzeitiger Anstellung seiner Vorderkante (18) mittels einer Verstelleinrichtung (19) nach vorne in Richtung der vorgelagerten Sitzanlage (12) bewegt wird und ferner die Seitenteile (14, 15) der Abdeckung (8) nach innen und unten klappen, so daß in der Freigabestellung (D) der mehrteiligen Abdeckung (8) diese die Sitzablage (12) nach oben hin schildartig umgibt.

2. Cabriolet-Fahrzeug nach Anspruch 1, **dadurch gekennzeichnet, daß** die Verstelleinrichtung (19) für das Mittelteil (13) auf jeder Längsseite des Mittelteils (13) eine Viergelenkanordnung (20) umfaßt.

3. Cabriolet-Fahrzeug nach Anspruch 2, **dadurch gekennzeichnet, daß** eine gesteuerte Viergelenkanordnung (20) vorgesehen ist, dergestalt, daß ein unterer Drehpunkt (35) der Viergelenkanordnung (20) während der Verstellbewegung des Mittelteils (13) seine Lage verändert.

4. Cabriolet-Fahrzeug nach den Ansprüchen 1 bis 3, **dadurch gekennzeichnet, daß** die Viergelenkanordnung (20) zwei langgestreckte Lenkhebel (21, 22) umfaßt, deren eine Enden (23, 24) drehbar mit dem Mittelteil (13) verbunden sind.

5. Cabriolet-Fahrzeug nach Anspruch 4, **dadurch gekennzeichnet, daß** der andere Endbereich des in Fahrtrichtung gesehen vorneliegenden Lenkhebels (21) gelenkig an einer Aufbaukonsole (25) gelagert ist und eine den aufbauseitigen Drehpunkt (26) überragende Verlängerung (27) aufweist, die über einen Zwischenhebel (29) gelenkig mit einem Winkelhebel (31) verbunden ist, wobei der Winkelhebel (31) im Verbindungsbereich seiner beiden Schenkel (32, 33) an der Aufbaukonsole (25) drehbar gelagert ist und das freie Ende eines Armes (32) an den Zwischenhebel (29) und das freie Ende des anderen Armes (33) mit dem anderen Ende des in Fahrtrichtung hintenliegenden Lenkhebels (22) gelenkig verbunden ist.

6. Cabriolet-Fahrzeug nach Anspruch 1, **dadurch gekennzeichnet, daß** beide Seitenteile (14,15) der Abdeckung (8) über eine sich etwa in Längsrichtung des Fahrzeuges erstreckende Scharnierachse (36, 37) schwenkbar mit dem Mittelteil (13) verbunden sind.

7. Cabriolet-Fahrzeug nach einem oder mehreren der vorangegangenen Ansprüche, **dadurch gekennzeichnet, daß** einer der beiden Lenkhebel (21, 22) an jeder Längsseite des Mittelteils (13) über ein Steuerelement (38) mit einem entfernt von der Scharnierachse (36, 37) liegenden Bereich (39) des Seitenteiles (14,15) verbunden ist.

8. Cabriolet-Fahrzeug nach Anspruch 7, **dadurch gekennzeichnet, daß** das Steuerelement (38) durch eine längenveränderbare mehrteilige Schubstange (40) gebildet wird.

## Claims

1. Cabriolet with a top which, in its swung-back, stowed position, is accommodated in a rear accommodating space, which has a seat arrangement positioned in front of it, it being possible for the accommodating space to be closed off in the upward direction by a multi-part covering which is made up of a central part and two side parts connected to the lateral borders of the central part, it being possible, during the opening and closing operations of the cabriolet top, for the covering to be displaced beforehand in each case from a covering position into a release position, in which the cabriolet top can be actuated, **characterized in that**, with simultaneous adjustment of its front edge (18), the central part (13) of the covering (8) is moved forwards, by means of an adjusting device (19), in the direction of the seat arrangement (12) in front and, furthermore, the side parts (14, 15) of the covering (8) swing inwards and downwards, with the result that, in the release position (D) of the multi-part covering (8), the latter encloses the seat arrangement (12) in a shield-like manner in the upward direction.

2. Cabriolet according to Claim 1, **characterized in that** the adjusting device (19) for the central part (13) comprises a four-bar linkage arrangement (20) on each longitudinal side of the central part (13).

3. Cabriolet according to Claim 2, **characterized in that** a controlled four-bar linkage arrangement (20) is provided such that a bottom point of rotation (35) of the four-bar linkage arrangement (20) changes position during the adjusting movement of the central part (13).

4. Cabriolet according to Claims 1 to 3, **characterized in that** the four-bar linkage arrangement (20) comprises two elongate directing levers (21, 22), of which one end (23, 24) of each is connected rotatably to the central part (13).

5. Cabriolet according to Claim 4, **characterized in that** the other end region of the front directing lever (21), as seen in the direction of travel, is mounted in an articulated manner on a body support (25) and has an extension (27) which projects beyond the point of rotation (26) on the body and is connected in an articulated manner to an angle lever (31) via an intermediate lever (29), the angle lever (31) being mounted rotatably on the body support (25) in the region of connection of its two legs (32, 33), and the free end of one arm (32) being connected in an articulated manner to the intermediate lever (29) and the free end of the other arm (33) being connected in an articulated manner to the other end of the rear directing lever (22), as seen in the direction of travel.

6. Cabriolet according to Claim 1, **characterized in that** the two side parts (14, 15) of the covering (8) are connected to the central part (13) such that they can be pivoted via a hinge axis (36, 37) extending approximately in the longitudinal direction of the vehicle.

7. Cabriolet according to one or more of the preceding claims, **characterized in that** one of the two directing levers (21, 22), on each longitudinal side of the central part (13), is connected, via a control element (38), to a region (39) of the side part (14, 15), said region being remote from the hinge axis (36, 37).

8. Cabriolet according to Claim 7, **characterized in that** the control element (38) is formed by a changeable-length multi-part push rod (40).

## Revendications

1. Cabriolet doté d'une capote qui, dans sa position de rangement rabattue vers l'arrière, est reçue dans un espace de réception arrière devant lequel est montée une installation de sièges, l'espace de réception pouvant être fermé dans le haut par un capot en plusieurs parties qui est composé d'une partie centrale et de deux parties latérales raccordées aux bords latéraux de la partie centrale, et lors de l'opération d'ouverture ou de fermeture de la capote, le capot peut être déplacé chaque fois vers l'avant depuis une position de recouvrement jusque dans une position de libération qui permet l'actionnement de la capote, **caractérisé en ce que** la partie centrale (13) du capot (8) est déplacée en même temps que son bord avant (18) est déplacé vers l'avant en direction de l'installation de siège (12) montée en avant de lui, au moyen d'un dispositif de déplacement (19), et en outre les parties latérales (14, 15) du capot (8) basculent vers l'intérieur et vers le bas de telle sorte que lorsque le capot (8) en plusieurs pièces est en position de libération (D), il entoure le haut de l'installation des sièges (12) à la manière d'un bouclier.

2. Cabriolet selon la revendication 1, **caractérisé en ce que** le dispositif de déplacement (19) de la partie centrale (13) comprend sur chaque côté longitudinal de la partie centrale (13) un agencement (20) à quatre articulations.

3. Cabriolet selon la revendication 2, **caractérisé en ce qu'**un agencement (20) à quatre articulations asservi est prévu, de telle sorte qu'un centre de rotation inférieur (35) de l'agencement (20) à quatre articulations change de position pendant le déplacement de la partie centrale (13).

4. Cabriolet selon les revendications 1 à 3,
**caractérisé en ce que** l'agencement (20) à quatre articulations comprend deux leviers articulés (21, 22) allongés dont une extrémité (23, 24) est reliée à rotation à la partie centrale (13).

5. Cabriolet selon la revendication 4, **caractérisé en ce que** l'autre zone d'extrémité du levier articulé (21) situé en avant dans la direction d'avancement du véhicule est monté de manière articulée sur une console (25) de la structure et présente un prolongement (27) qui déborde du centre de rotation (26) situé du côté de la structure et qui est relié à un levier coudé (31) de manière articulée, par l'intermédiaire d'un levier intermédiaire (29), le levier coudé (31) étant monté à rotation à la console (25) de la structure dans la zone de la liaison de ses deux ailes (32, 33), l'extrémité libre d'un bras (32) étant reliée de manière articulée au levier intermédiaire (29) et l'extrémité libre de l'autre bras (33) étant reliée de manière articulée à l'autre extrémité du levier articulé (22) situé en arrière dans le sens d'avancement du véhicule.

6. Cabriolet selon la revendication 1, **caractérisé en ce que** les deux parties latérales (14, 15) du capot (8) sont reliées à pivotement à la partie centrale (13) par l'intermédiaire d'un axe de charnière (36, 37) qui s'étend sensiblement dans le sens de la longueur du véhicule.

7. Cabriolet selon l'une ou plusieurs des revendications précédentes, **caractérisé en ce que** l'un des deux leviers articulés (21, 22) situés sur chaque côté longitudinal de la partie centrale (13) est relié par un élément de commande (38) à une zone (39) de la partie latérale (14, 15) située à distance de l'axe de charnière (36, 37).

8. Cabriolet selon la revendication 7, **caractérisé en ce que** l'élément de commande (38) est formé par une tringle de poussée (40) en plusieurs pièces, de longueur variable.
